Europäisches Patentamt

European Patent Office

Office européen des brevets

(19)

(11) **EP 1 096 460 A2**

(12) **EUROPEAN PATENT APPLICATION**

(43) Date of publication:
02.05.2001 Bulletin 2001/18

(51) Int Cl.$^7$: **G08G 1/16**

(21) Application number: 00309516.3

(22) Date of filing: 27.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **27.10.1999 JP 30491599**

(71) Applicant: **Director General of Public Works Research Institute, Ministry of Construction Tsukuba-shi, Ibaraki-ken 305-0804 (JP)**

(72) Inventors:
• **Noguchi, N.**
  **Ishikawajima-Harima Heavy Ind. Co. Ltd**
  **Chiyoda-ku, Tokyo (JP)**
• **Takiguchi, Akihiko**
  **Minato-ku, Tokyo (JP)**
• **Kubota, Koji,**
  **Nippon Telegraph & Telephone Corp.**
  **Chiyoda-ku, Tokyo (JP)**
• **Moteki, Satoshi, Isuzu Motors Ltd.**
  **Shinagawa-ku, Tokyo (JP)**
• **Ooya, Harutada**
  **7-12, Toranomon 1-chome, Minato-ku Tokyo (JP)**
• **Murakami, Hideaki, Omron Corporation**
  **Horikawa Higashi Hairu Shimogyo-ku Kyoto (JP)**
• **Yamada, Masaya, Sumitomo Electric Ind., Ltd**
  **Chuo-ku, Osaka (JP)**

• **Takahashi, Hiroshi, Nissan Motor Co., Ltd**
  **Kanagawa-ku, Yokohama-shi, Kanagawa (JP)**
• **Kuno, Akira**
  **Kariya-shi, Aichi-ken (JP)**
• **Ezure, Hisashi, Toshiba Co.**
  **Kawasaki-shi, Kanagawa-ken (JP)**
• **Kondo, Tetsuaki, Hitachi, Ltd.**
  **Chiyoda-ku, Tokyo (JP)**
• **Matsubara, Ryoji, Hitachi Cable, Ltd**
  **Chiyoda-ku, Tokyo (JP)**
• **Ohira, Yasuyuki**
  **Nakahara-ku, Kawasaki-shi, Kanagawa-ken (JP)**
• **Ohtani, Kenichi,**
  **c/o The Furukawa Electric Co.,Ltd**
  **Tokyo (JP)**
• **Mashimo, Hiroshi, Honda Motor Co., Ltd.**
  **Minato-ku, Tokyo (JP)**
• **Inobe, Takao**
  **1006, Oaza Kadoma, Kadoma-shi, Osaka (JP)**
• **Miyamoto, Kazumasa,**
  **Mitsubishi Heavy Ind. Co., Ind**
  **Chiyoda-ku, Tokyo (JP)**
• **Kawahara, Kazutaka, Mitsubishi Electric Corp.**
  **Chiyoda-ku, Tokyo (JP)**

(74) Representative: **Tothill, John Paul et al**
**Frank B. Dehn & Co.**
**179 Queen Victoria Street**
**London EC4V 4EL (GB)**

(54) **Obstacle collision prevention system**

(57) An obstacle collision prevention system which can effectively prevent a collision even when an AHS car (2) is running in the "restricted field-of-vision zone" or when a vehicle running ahead suddenly reduces a running speed or stops, said system comprising an on-road processing facility, a plurality of fixed point information detection support facility, and a road-to-vehicle communications unit (15) for delivering various information to each AHS car (2), said system also comprising a vehicle comprising a fixed point information detection sensor (17) for recognizing that the AHS car (2) has entered a service area, an on-vehicle unit (6) for computing a distance between the AHS car (2) and an obstacle and outputting an automatic control or an instruction, and a vehicle control unit (7) for providing controls for auto-matic speed reduction. The obstacle collision prevention system detects an obstacle by integrating various types of information from the facilities and units, auto-matically provides controls for speed reduction and pre-vention of a collision, performs discrete communications between the on-road facilities and each vehicle, esti-mates the possibility of a collision with an obstacle or a vehicle running ahead based on information concerning obstacles ahead and any of the vehicles running in be-tween, and selectively delivers the information to other vehicles to provide controls and instructions for speed reduction and prevention of a collision from the on-road facilities.

## FIG. 1

**Description**

FIELD OF THE INVENTION

The present invention relates to an obstacle collision prevention system for preventing a vehicle such as an AHS (Advanced-cruise-assist Highway System) car running on a road from colliding with another car at a stop or other obstacle. (Vehicles to which the system according to the present invention are application are described as AHS cars hereinafter).

BACKGROUND OF THE INVENTION

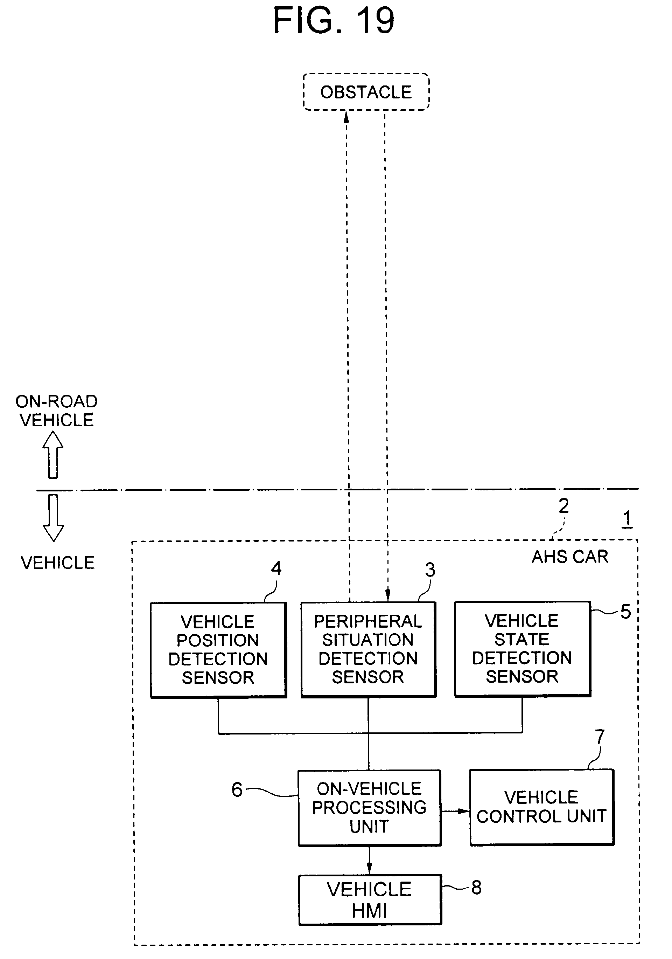

Conventionally as an obstacle collision prevention system for preventing an AHS car running on a road from colliding with an obstacle present on the road, the method of detecting the obstacle with an on-vehicle sensor provided on the AHS car has been employed. Fig. 19 is a general block diagram showing the general conventional method of preventing collision with an obstacle. Namely, in the obstacle collision prevention system 1, there are provided in the AHS car 2, which is a vehicle, a peripheral situation detection sensor 3 as an on-vehicle sensor for detecting a peripheral situation on the road, a vehicle position detection sensor 4 for detecting the car itself, a vehicle state detection sensor 5 for detecting a running speed of the vehicle itself, and an on-vehicle processing unit 6 for processing information from the sensors 3, 4, 5. Designated at the reference numeral 7 is a vehicle controller, and a running speed of the vehicle (steering angle) is automatically controlled (for speed reduction) by this vehicle controller 7. Then when any obstacle is detected by the peripheral situation detection sensor 3, an alarm is given to a driver from a vehicle HMI (Human Machine Interface) 8 which is an alarm unit based on information from the on-vehicle processing unit 6 to which the vehicle position detection sensor 4 and vehicle state detection sensor 5 are integrated. Upon reception of this alarm, the driver previously recognize a position of the obstacle and can evade the obstacle not to collide with it.

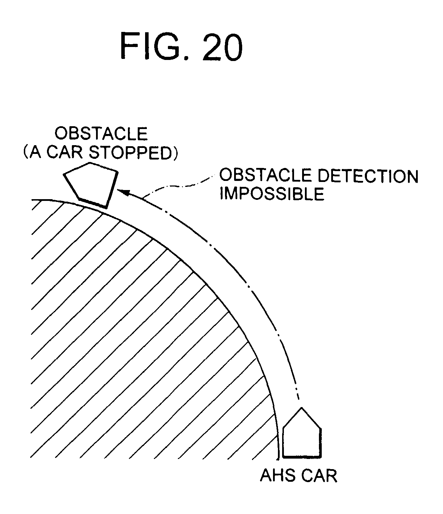

In a zone where a wide field of vision is not provided, namely in the so-called restricted field-of-vision zone such as a curved road not offering a wide field of vision as shown in Fig. 20, a driver can not visually recognize an obstacle from a distant position, a collision prevention system has been proposed in which information concerning obstacles are provided from obstacle detection devices provided on a road to the driver.

With the conventional types of collision prevention systems as described above, however, the driver's response for speed reduction is delayed, which sometimes makes it impossible to evade the obstacle.

Even if any obstacle is not present, when a car running ahead suddenly reduces the running speed, for instance, on a sharp up or down slope, the response for speed reduction is delayed, and also in this case it may be impossible to prevent collision with an obstacle. When a traffic accident due to the collision as described above occurs, the driver can not be protected, and in addition, traffic jam may occur, so that realization of a collision prevention measure in the restricted field-of-vision zone has strongly been hoped.

OBJECT AND SUMMARY OF THE INVENTION

To achieve the object as described above, the invention of Claim 1 comprises road facilities in turn comprising an obstacle detection facility for detecting information concerning an obstacle on a road, an on-road processing facility for processing information concerning obstacles detected by the obstacle detection facility with an on-road database in which road line form information is stored, road-to-vehicle communications facility for communicating information processed by this on-road processing facility to the road-to-vehicle communication facility loaded on the vehicle, and a plurality of fixed point information detection support facilities provided in a prespecified service area; a vehicle comprising, as on-vehicle devices, a fixed point information detection sensor for recognizing entry of the vehicle into the service area by detecting any of the detection support facilities, a road-to-vehicle communication unit for executing communication and delivery of information to and from the road-to-vehicle communications facility, a distance computing function for computing a distance between the running car and an obstacle, an on-vehicle processing unit having a collision determination function for determining possibility of collision based on the computed distance and issuing an automatic control instruction, a vehicle control unit for providing controls for speed reduction, stopping, or prevention of collision of the vehicle based on the information issued from this on-vehicle processing unit, and a vehicle HMI for giving an alarm to a driver of the vehicle, and the invention is characterized in that an alarm is given to the driver by integrating various types of information provided from each of the facilities to detect existence of an obstacle dangerous to the vehicle and issuing an alarm to the driver with the alarm unit when the obstacle is detected, that controls for reducing a speed of or stopping the vehicle or for evading the obstacle or changing a running lane with the vehicle control unit are automatically provided, that communications and information delivery between the on-road facilities and each vehicle is performed discretely and the possibility of speed reduction or stoppage of any vehicle running ahead is estimated based on the information concerning an obstacle existing ahead or near any of a plurality of vehicles running ahead, and the information is selectively delivered to other vehicles via the on-road facilities, and that an instruction for reducing the running speed or evading the detected obstacle is given from the on-road facilities to the vehicles.

The preferred embodiment of invention defined in Claim 2 further comprises, in addition to the on-vehicle devices in the invention of Claim 1, a peripheral situation detection sensor for detecting an obstacle on a road, and is characterized in that the information detected by this peripheral situation detection sensor and that detected by the obstacle detection sensor and that detected by the obstacle detection facility are integrated with each other.

The invention of Claim 3 comprises, in addition to the on-road facilities according to the invention of Claim 1 or Claim 2, a road surface situation detection facility for detecting a road surface situation such as humidity, fallen snow, and freezing on the road surface, and is characterized in that the road surface information is delivered by the road-to-vehicle communications facility to the vehicle, and assuming that the deceleration distance $L_1$ can be computed from the vehicle's deceleration degree a, a reaction time of the driver $t_0$, the rising time $t_1$, and a running speed of the vehicle v, the deceleration degree a can be estimated from the road surface information. An object of the present invention is to provide an obstacle collision prevention system which can quickly and accurately take necessary measures for prevention of collision when an AHS car is running in the "restricted field-of-vision zone", even if a vehicle running ahead suddenly decelerates.

BRIEF DESCRIPTION OF THE DRAWINGS

Fig. 1 is a general block diagram showing an obstacle collision prevention system according to the present invention;

Fig. 2 is an explanatory view showing general configuration and functions of the obstacle collision prevention system on a curved road;

Fig. 3 is a time chart showing the functional sequence of the obstacle collision prevention system;

Fig. 4 is a time chart showing the functional sequence of the obstacle collision prevention system;

Fig. 5 is an explanatory view for illustrating a method of determining the possibility of a collision with an obstacle;

Fig. 6 is a time chart showing the on-road processing facilities;

Fig. 7 is an explanatory view showing general configuration and functions of the obstacle collision prevention system centering on an AHS car;

Fig. 8 is a time chart centering on the AHS car;

Fig. 9 is a flow chart showing a sequence in the processing information concerning a road surface situation in the on-road processing facilities;

Fig. 10 is a flow chart showing a sequence in the processing for preparation of output data in the on-road processing facilities;

Fig. 11 is a view for illustrating a target section in a vehicle-dedicated road;

Fig. 12 A is an explanatory view showing changing points of curvature radii;

Fig. 12B is an explanatory view showing changing points of slope;

Fig. 13 is a view showing an example of arrangement of the fixed point information detection support facilities;

Fig. 14 is a view showing an example of arrangement of the road surface situation detection facilities;

Fig. 15 is a view showing an example of arrangement of the obstacle detection facilities;

Fig. 16 is a view showing an example of arrangement of the road-to-vehicle communications facility;

Fig. 17 is a view showing an example of arrangement of the on-road facilities as well as arrangement of the control area;

Fig. 18 is an explanatory view illustrating discrete communications between the road and each vehicle;

Fig. 19 is a block diagram showing general configuration of the obstacle collision prevention system based on the conventional technology; and

Fig. 20 is an explanatory view illustrating how the obstacle collision prevention system based on the conventional technology recognized an obstacle.

DETAILED DESCRIPTION OF THE PREFERRED EMBODIMENTS

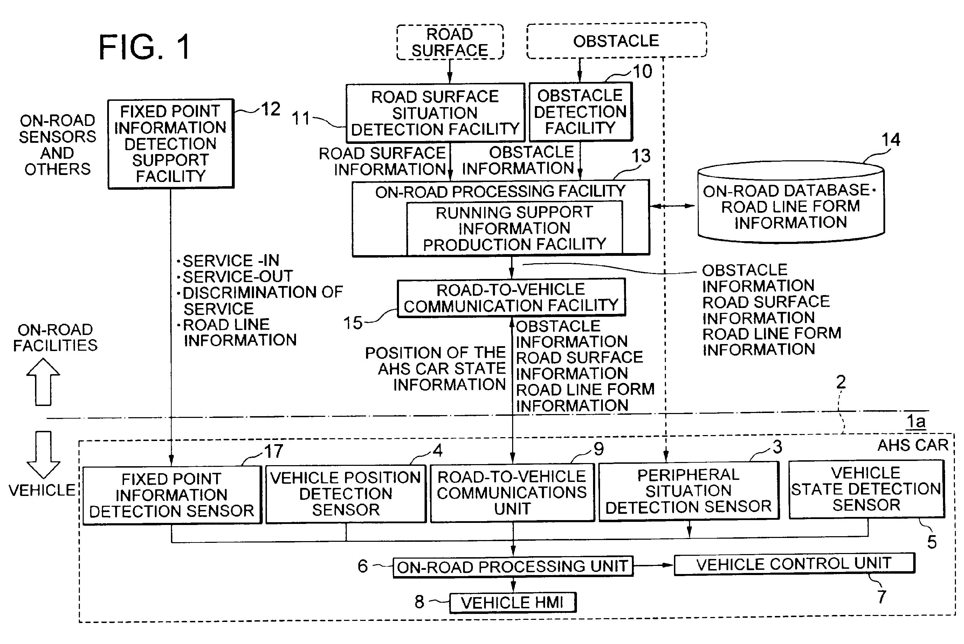

Fig. 1 is a block diagram illustrating general configuration of an obstacle collision prevention system according to one embodiment of the present invention. In this figure, only one of the each installed devices and facilities are shown, but actually a number of devices and facilities may be required to be installed depending on the position of installation, or a monitoring area for the on-road infrastructure. I/O data in the figure shows only information data essentially required in this invention. The present invention is described in detail below with reference to the general block diagram in Fig. 1.

A feature of the present invention consists in the point that a position of an obstacle is detected by integrating obstacle information from a sensor provided on a vehicle and that from an obstacle detection facility provided in the on-road infrastructure (on-road facilities) for detecting obstacles. To achieve the objective as described above, in an AHS car 2 constituting an obstacle collision prevention system la, there are provided a peripheral situation detection sensor 3 as an on-vehicle sensor for detecting obstacles near the vehicle, a vehicle position detection sensor 4 for detecting a position of the AHS car itself, a vehicle state detection sensor 5 for detecting a running speed of the AHS car, and an on-vehicle processing unit 6 for processing information from the sensors 3, 4, and 5. The reference numeral 7 indicates a vehicle control unit, and a running speed (steering angle) of the AHS car is controlled by this vehicle control unit 7. The reference numeral 8 indicates a vehicle HMI as an alarm unit.

Each of the sensors and units is described in detail below. A position of an obstacle near a running AHS car and a running speed of other vehicles running ahead are detected by the peripheral situation detection sensor 3. The on-vehicle processing unit 6 is a unit which collects various types of information for the AHS car and computes/determines the possibility of collision based on the information, and computes a distance between the AHS car and an obstacle and a timing for starting braking, and the vehicle control unit 7 outputs an "instruction value" to the vehicle HMI 8. This "instruction value" is a timing value for speed reduction control as well as for generation of an alarm signal. The reference 9 indicates a road-to-vehicle communication unit for receiving information concerning a road surface detected by the on-road facilities as well as information concerning the obstacle. As described later, the information concerning an obstacle received by the road-to-vehicle communication unit 9 is directly delivered to the on-vehicle processing unit 6.

When an obstacle is detected by the peripheral situation detection sensor 3, information or an alarm is given to a driver of the AHS car from the vehicle HMI 8 which is an alarm unit based on information from the on-vehicle processing unit 6 based on the information from the vehicle position detection sensor 4 as well as from the vehicle state detection sensor 5.

On the other hand, the on-road facilities include an obstacle detection facility 10 for detecting an obstacle on a road and a road surface situation detection facility 11 for detecting information on a surface of the road each as infrastructure. The obstacle detection facility 10 is a facility for basically detecting positions of obstacles (four or more-wheel cars at a stop and those running at a low speed) impeding smooth running of the AHS car, and this facility is installed in the "restricted field-of-vision zone" such as a curve not providing a wide field of vision in this example. The road surface situation detection facility 11 is a facility for detecting a situation of a road on which the AHS car is running, and more specifically this facility detects sections of the road surface where substantial changes such as "dry", "humid", and "frozen" are observed. The reference numeral 12 indicates an on-road processing facility which functions as a running support information preparation facility and executes such processing as preparation of output data or computing, and information concerning the road surface and information concerning an obstacle are delivered from the obstacle detection facility 10 and road surface situation detection facility 11 to this on-road processing facility 13.

The reference numeral 14 indicates an on-road database, and road line form information is stored in this on-road database 14, and data delivery is executed, when required, between this on-road database 14 and the on-road processing facility 13. However, information delivery from the on-road database 14 is executed only in the "restricted field-of-vision zone" such as a curved road or a steep up or down slope. The road line form information can also be stored in a navigation system or the like in the AHS car 2, so that the road line form information from the AHS car 2 can also be used concurrently. Information concerning the road surface or obstacles detected by each of the facilities 10 and 11 is processed by the on-road processing facility 13 and is delivered via the road-to-vehicle communications facility 15 to the road-to-vehicle communications unit 9 in the AHS car 2.

In this invention, there is provided the fixed point information detection support facility 12 capable of recognizing information concerning lanes on a road as on-road infrastructure, and information concerning the lane situation detected by this fixed point information detection support facility 12 is delivered to a fixed point information detection sensor 17 provided on the vehicle. A situation of a road surface and obstacles on a road are detected based on the delivered information as well as on the detection information from the road-to-vehicle communication facility 15 and the peripheral situation detection sensor 3. The information concerning a road surface detected by each of the facilities 10, 11, 12 and information concerning obstacles are delivered via the road-to-vehicle communications facility 15 to the road-to-vehicle communication unit 9 on the vehicle, and as described above, an obstacle is detected by integrating the information from these peripheral situation detection sensors 3 and information concerning obstacles delivered to the road-to-vehicle communication unit 9. When an obstacle is detected, an alarm is issued from the alarm unit to the driver. Upon this alarm, the driver can evade the obstacle to prevent collision against it.

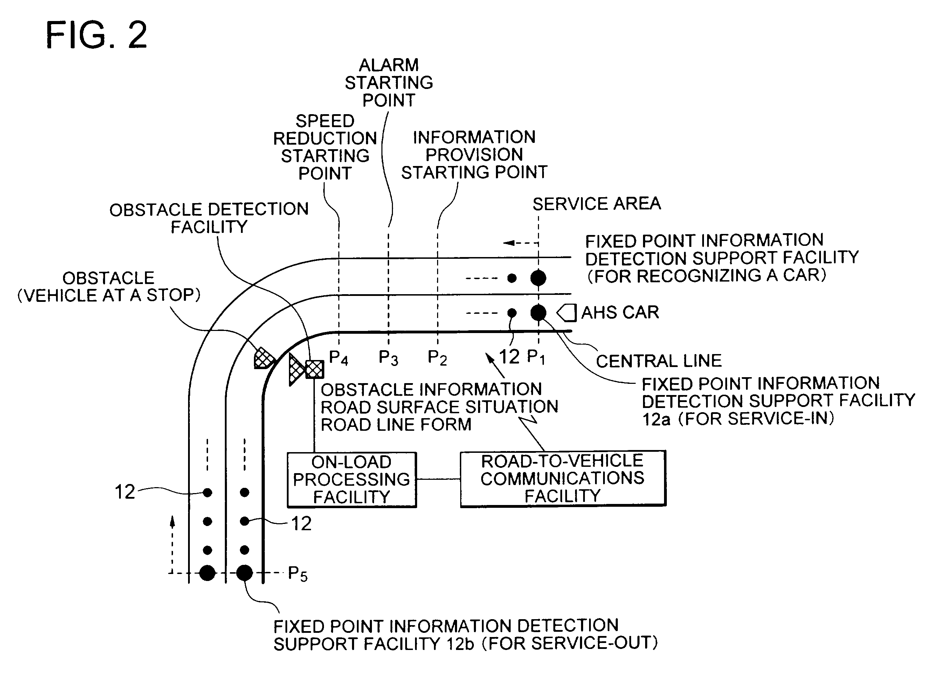

Configuration of and functions in the embodiment of the present invention are described in detail below with reference to Fig. 2 to Fig. 4. The following description assumes that an obstacle in a straight section of a vehicle-dedicated road is detected mainly by the peripheral situation detection sensor 3 (Refer to Fig. 1), and also that vehicles running in a zone where other services are provided can receive information concerning a road surface or the like. The "service area" as used in the following description indicates a specified road area (section) in which the "obstacle collision prevention method" can be effected.

Fig. 2 shows a curved road (one side of a vehicle-dedicated road), one of sections to which the present invention is applied. As shown in Fig. 2, a plurality of fixed point information detection facilities 12, 12 are provided at a substantially even interval (for instance, 2 m) , in the service area on the road, and of these, a fixed point information detection support facility 12a at the point $P_1$ functions as a service-in, while a fixed point information detection support facility 12b at the point $P_5$ functions as a service-out. Actually lane markers or the like can be employed for the fixed point information detection support facilities. The fixed point information detection support facilities 12 at the points $P_1$ to $P_4$ function for identifying running vehicles. The reference 10 indicates the obstacle detection facility described in relation to Fig. 1, and this obstacle detection facility 10 is provided near the curved section close to the restricted field-of-vision zone as shown in the figure. As described above, as recognition of an obstacle (a vehicle at a stop) by the AHS car 2 is hard, the obstacle detection facility 10 is provided.

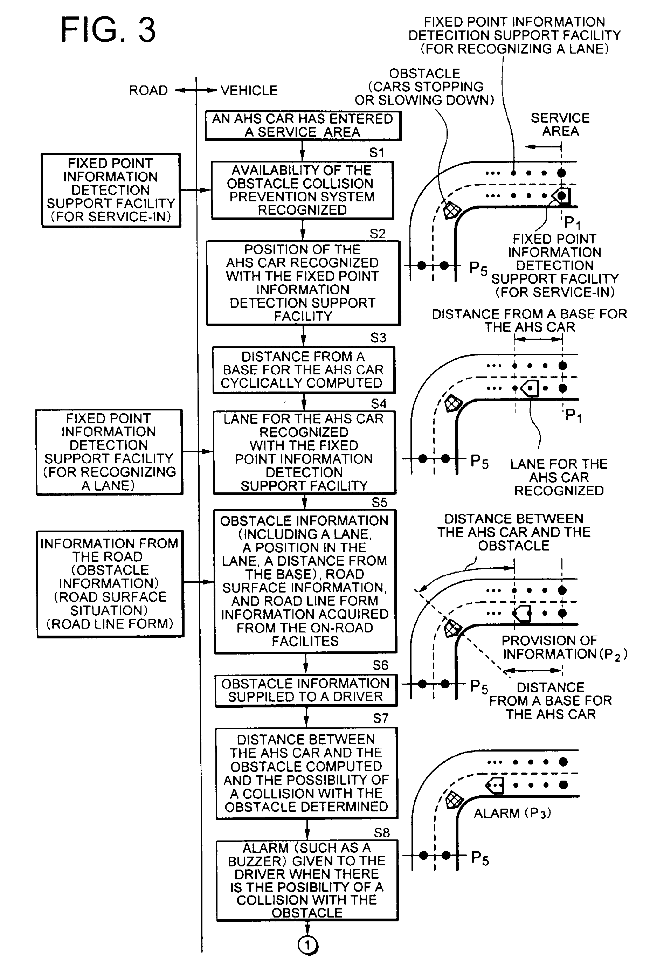

As shown in Fig. 3, the AHS car 2 having entered a service area at first recognizes that a service is provided by the fixed point information detection facility 12a at the point $P_1$, and the obstacle collision prevention function (service) is started (S1). Each time the AHS car 2 passes by each of a plurality of the fixed point information detection support facilities 12, a position of the AHS car 2 is identified (S2), and because of this function, a distance from the point $P_1$ as a base point (service-in) is periodically calculated (S3). Then, the AHS car 2 recognizes with the fixed point information detection support facilities 12 where the AHS car 2 itself is running (S4). When an obstacle in the service area is detected by the obstacle detection facility 10, positional information concerning a lane in which the obstacle is present and a distance from the base point $P_1$ to the obstacle is provided as obstacle information to the AHS car 2. This obstacle information is transmitted at a cycle together with the road surface situation information and road line form information via the road-to-vehicle communications facility 15 to the AHS car 2. Then a distance from the AHS car 2 to the obstacle is computed based on the obstacle information as well as on the distance between the AHS car 2 to the base point $P_1$ (S5). The AHS car 2 provides the information concerning the obstacle to the driver at the point $P_2$ as a point for starting provision of information (S6), and also determines the possibility of collision with the obstacle based on information concerning a lane in which the obstacle is present, a position of the obstacle in the lane, information on the distance between the AHS car 2 and the obstacle as well as on the road surface situation, and information on the road line form (S7).

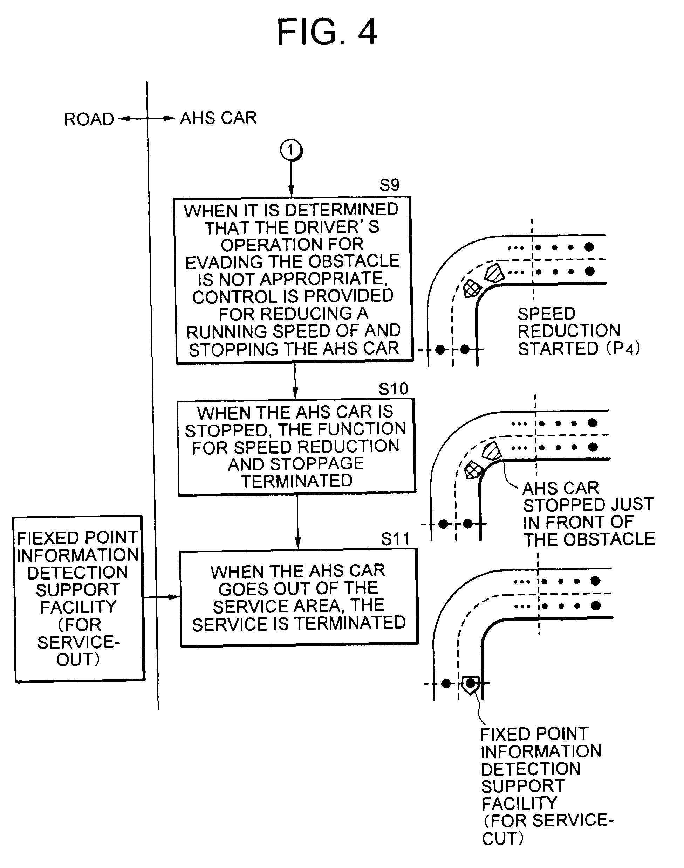

When it is determined that the possibility for the running AHS car 2 to collide with the obstacle is high, an alarm is given, for instance, with a buzzer to a driver of the AHS car 2 at the point $P_2$ as a point for starting an alarm (S8). In this step, as shown in Fig. 4, when it is determined that the driver's operation for evading the obstacle is not sufficient, a running speed of the AHS car 2 is automatically reduced at the point $P_4$ as a point for starting speed reduction to stop the AHS car 2 (S9). For reducing a running speed of and stopping the AHS car 2, in addition to speed control, also the lane tracking control or the deviation from lane prevention/alarm control unit can be used concurrently for the driver. The functions for reducing a running speed of and stopping the AHS car 2 is terminated at a time point when the AHS car 2 completely stops (S10). Then, at the time point when the AHS car 2 has passed by the point $P_5$ as a point for service-out for the fixed point information detection support facility 12b, provision of a series of services by the system is terminated (S11). A range of the "restricted field-of-vision zone" in a service area naturally varies from place to place on the road, arrangement of the fixed point information support facilities for service-in and service-out and obstacle detection facilities should be examined each time according to a form of the road to which the present invention is applied.

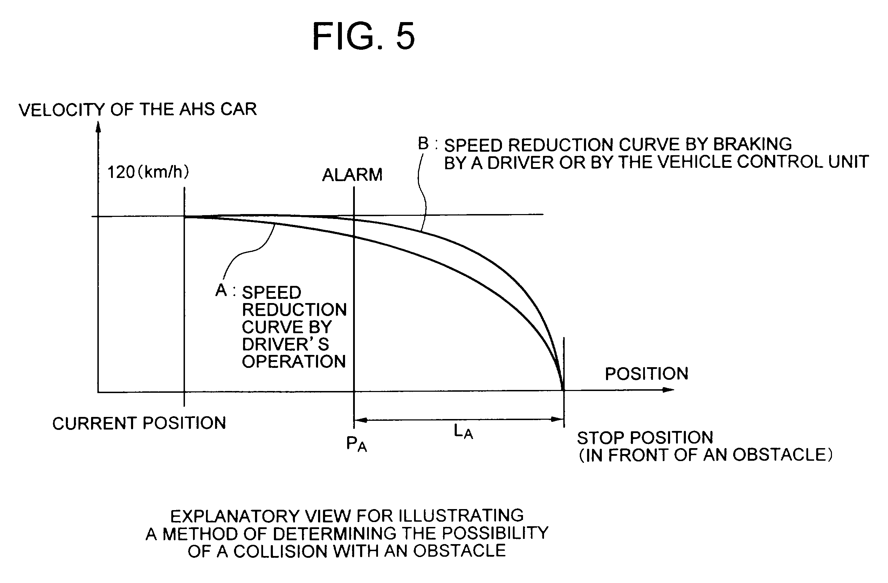

Fig. 5 is an explanatory view showing general contents of the determination method employed in (an example of) the obstacle collision prevention system according to the present invention. Herein, the curve A is a "speed-position curve" for a normal case where a driver reduces a running speed of a car in front of (immediately before) an obstacle and stops the car, while the curve B is a "speed-position curve" for an emergent case where a driver brakes in an emergency or where a running speed of an AHS car is reduced by the vehicle control unit 7 (Refer to Fig. 1) on the AHS car and then the AHS car is stopped. The "speed-position" curves shown by the curves A and B can be prepared by the on-vehicle processing unit 6 (Refer to Fig. 1) by computing based on a running speed of the AHS car as well as the road surface information and road line form information provided as input from the on-road infrastructure facilities. Namely, for instance, in a case where the AHS car is running at the speed of 120 (km/h) in front of an obstacle, the on-vehicle processing unit determines the possibility for the AHS car to collide with the obstacle by constantly monitoring the vehicle's position, the running speed, and line form of the road, and determines in this example that the AHS car may collide against the obstacle at the time point when the AHS car has reached the "point $P_A$" in the figure, and an alarm is given to the driver at the "point $P_A$ ". Then, when it is determined that the driver's operation for evading the obstacle is not appropriate, after the AHS car runs over the distance $L_A$ (idle run distance), the AHS car is automatically stopped at a position just in front of the obstacle. This speed reduction control and computing of the distance $L_A$ are automatically executed by the vehicle control unit 7.

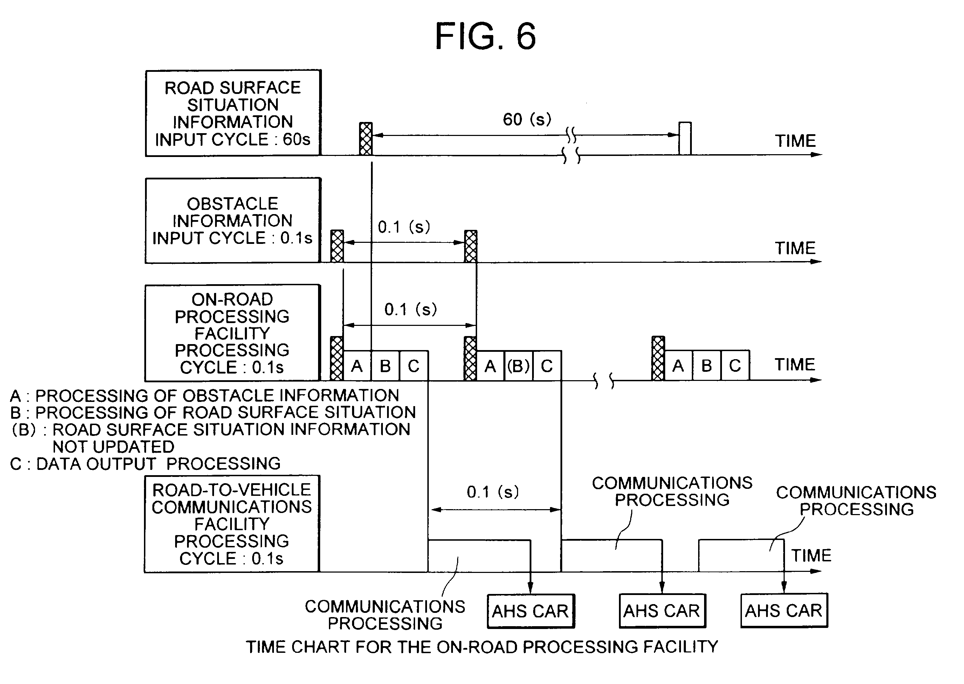

Fig. 6 shows an example of a time chart which is applied to the present invention as described above. Namely, this time chart mainly shows the on-road facility for the road section (curved road) as shown in Fig. 2. In this time chart, the figure A shows the processing for obstacle information, figure B shows the processing for information concerning a road surface situation, and the figure C shows the data output processing. (B) in Fig. 6 assumes that updating of road surface data is not performed. In this time chart, an input cycle of information concerning the road surface situation starts once for every 60 seconds, while an input cycle for the obstacle information, a processing cycle of the on-road processing facility 13, and a processing cycle of the road-to-vehicle communications facility 15 start once for every 0.1 second. Then also the processing for information concerning the road surface situation is executed simultaneously when the information concerning the road surface information is inputted, and when the data output processing is executed, the processing for communications to each AHS car is executed via the on-road communication facility. Input information in the information is the obstacle information and that concerning a road surface situation, and of these, the obstacle information is obtained once for every 0.1 second from the obstacle detection facility 10, while the information concerning a road surface situation is obtained once for every 60 seconds from the road surface situation detection facility 11 and is stored in the on-road database 14.

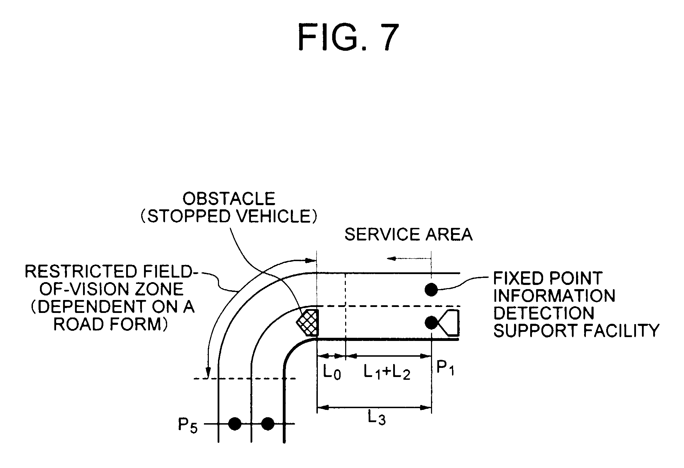

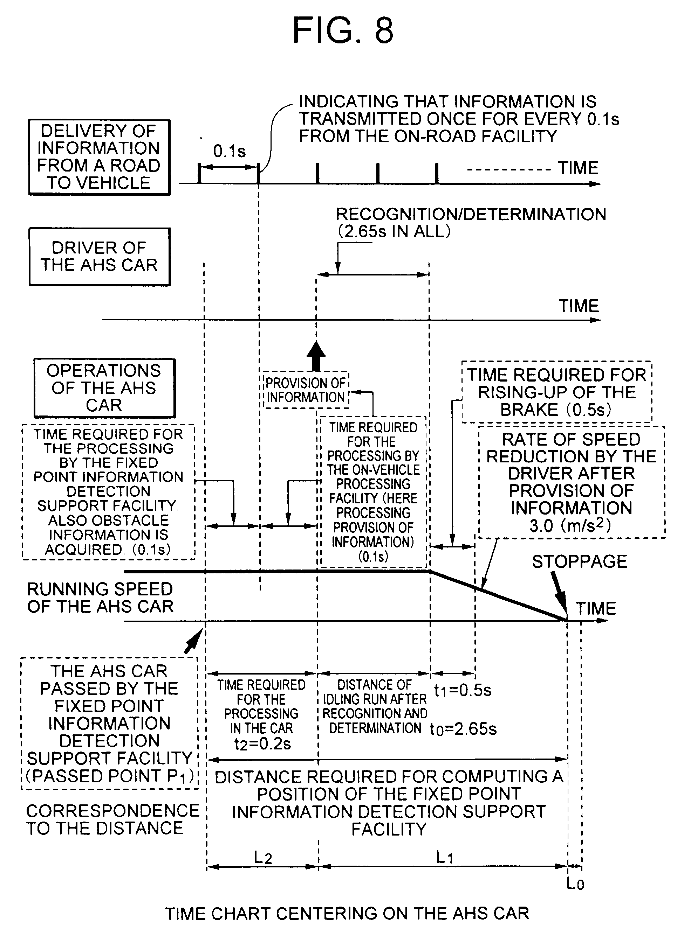

Fig. 7 and Fig. 8 are a time chart and a view for explanation of functions for computing a management area by the on-road facilities according to the present invention, and these figures mainly show an AHS car and the driver's operation. Namely the management area by the on-road facility according to the present invention is a range of the "restricted field-of-vision zone" plus a range from a fixed point information detection support facility to an entrance of the "restricted filed-of-vision zone". Actually the range of the restricted field-of-vision zone depends on a form of a road, so that in this example a distance $L_3$ from the fixed point information detection support facility (at the point $P_1$) to an entrance of the "restricted field-of-vision zone", and more specifically this "distance $L_3$" can be computed through the equation 3 below.

$$L_3 = L_2 + L_1 + L_0 \tag{1}$$

wherein the "distance $L_0$" indicates a distance over which the AHS car runs for a period of time $t_2$ from a time point when it passes by the fixed point information detection support facility, and specifically this "distance $L_3$" can be computed through the following equation 2:

$$L_3 = V \cdot t_2 \tag{2}$$

Herein, assuming that a running speed V of the AHS car is 120 (km/h),

$$L_3 = 120 \text{ (km/h)} \cdot 0.2 \text{ S} = 6.7 \text{ m}$$

The "distance $L_1$" indicates a distance required for speed reduction from a time point when necessary information is given to the driver until a time point when the driver actually brakes and stops the AHS car, and this distance $L_1$ required for speed reduction can be computed through the equation 3 below:

$$L_1 = V \cdot t_0 + V \cdot t_1 - \frac{\alpha}{6} t_1^2 + \frac{1}{2\alpha} \left( V - \frac{\alpha}{2} t_1 \right)^2 \tag{3}$$

Assuming that $t_0$ (reaction time) = 2.65 (s), $t_1$ (rising time) = 0.5 s, V (a running speed of the AHS car) = 120 (km/h), and $\alpha$ (a speed reduction rate indicating a rate of speed reduction performed by the driver after provision of the necessary information ) = 3.0 (m/s$^2$) respectively, the "speed reduction distance $L_1$" is 282 m.

The distance $L_0$ indicates an allowance distance required when the AHS car stops with a certain degree of allowance in front of an obstacle, and this "allowance distance $L_0$" is computed through the equation 4 below:

$$L_0 = \text{Average car head time} \cdot 0.1 \cdot \text{running speed} \tag{4}$$

Assuming that the average car head time = 1.5s and a running speed of the car V = 120 (km/h) in this equation, the allowance distance $L_0$ is 5.0 m. Therefore, the "distance $L_3$" from the fixed point information detection support facility to an entrance of the "restricted field-of-vision zone" can be computed from the values ($L_2$ , $L_1$ , $L_0$) computed through the equations 2 to 4 as follows:

$$L_3 = L_2 + L_1 + L_0 = 67 + 282 + 5 = 294 \fallingdotseq 300 \text{ m}$$

This value of $L_3$ is the same as the value of the detection range detected by the peripheral situation detection sensor 3. This also suggests that also the detection range when an obstacle is detected by a peripheral situation detection sensor on the AHS car is the above value (about 300 m).

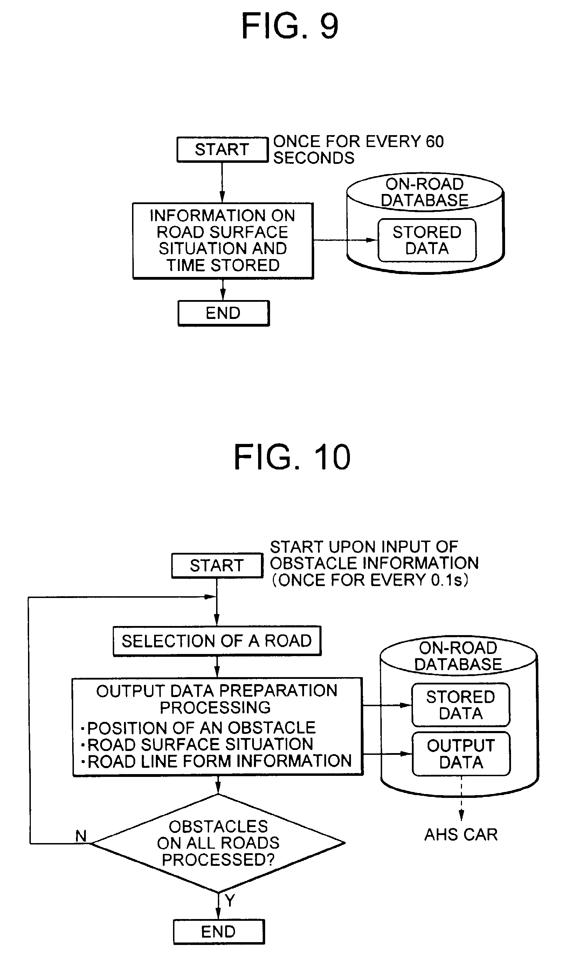

Fig. 9 and Fig. 10 indicate a flow of the processing executed by the on-road processing facility 13 for the object shown in Fig. 2. Fig. 9 is a flow of processing the information concerning a road surface situation detected by the road surface situation detection facility 11. As shown in Fig. 9, the processing by the on-road situation processing facility 11 is started "once for every 60 seconds" simultaneously when the processing flow above is started, and the information concerning the road surface situation detected by this road surface situation detection facility 11 and data on the detection time are stored as "stored data" in the on-road database 14 respectively.

Fig. 10 shows a flow of processing for preparation of output data to be set to an AHS car. As shown in Fig. 10, the "processing flow" is started upon input of obstacle information once for every 0.1 second, and at first "acquisition of obstacle information" is performed in response to "selection of a road", and then the "preparation of output data" is performed based on the "stored data" stored in the on-road database facility 14 by transacting information concerning a position of the obstacle, a road surface situation, a road line form, and others to and from the on-road processing facility 13. The prepared output data is transmitted via the road-to-vehicle communications facility 15 to the AHS car, and this processing flow is terminated at the time point "when information on obstacles on all roads has been processed".

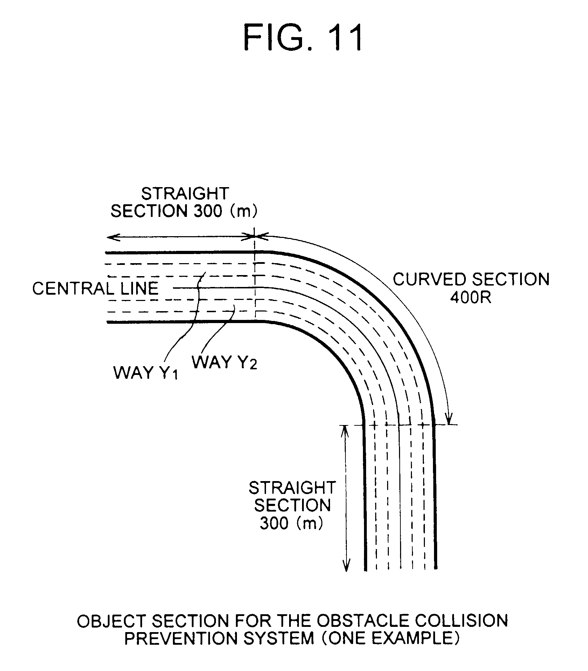

Fig. 11 shows an example of "input/output data" for a up-and-down road having two lanes (way $Y_1$ , way $Y_2$ ) in one side. More specifically Fig. 11 shows an example in which a radius of the curved road is "400 mm" and lengths of the straight sections in both sides of this curved section is "300 mm" respectively, and a list of "input data" for the on-road processing facility 13 in Fig. 11 is shown in Table 1 below. In this table 1, a large item for "data" is positions of obstacles on the first and second lanes on the way $Y_1$ and way $Y_2$ respectively, and as for the "input source" of obstacle information and information on a road surface situation, data detected by the obstacle detection facility 10 and road surface detection facility 11 are inputted at a specified cycle.

Table 1

| Data | | Data quantity | Input source | Input cycle |
|---|---|---|---|---|
| Large item | Detail | | | |
| Obstacle information | Position of an obstacle in the first lane of Way $Y_1$ | 1 | Obstacle detection facility | 0.1 s |
| | Position of an obstacle in the second lane of Way $Y_1$ | 1 | Obstacle detection facility | 0.1 s |
| | Position of an obstacle in the third lane of Way $Y_1$ | 1 | Obstacle detection facility | 0.1 s |
| | Position of an obstacle in the first lane of Way $Y_2$ | 1 | Obstacle detection facility | 0.1 s |
| | Position of an obstacle in the second lane of Way $Y_2$ | 1 | Obstacle detection facility | 0.1 s |
| | Position of an obstacle in the third lane of Way $Y_2$ | 1 | Obstacle detection facility | 0.1 s |
| Road surface situation | Road surface situation in a service area | 1 | Road surface situation detection facility | 60 s |

Further a list of "output data" from the road-to-vehicle communications facility 15 to the AHS car is shown in Table 2 below.

Table 2

| Data | | Data quantity | Input source | Input cycle |
|---|---|---|---|---|
| Large item | Detail | | | |
| Obstacle information | Position of an obstacle in the first lane of Way $Y_1$ | 1 | AHS car on the way $Y_1$ | 0.1 s |
| | Position of an obstacle in the second lane of Way $Y_1$ | 1 | AHS car on the way $Y_1$ | 0.1 s |
| | Position of an obstacle in the third lane of Way $Y_1$ | 1 | AHS car on the way $Y_1$ | 0.1 s |
| | Position of an obstacle in the first lane of Way $Y_2$ | 1 | AHS car on the way $Y_2$ | 0.1 s |
| | Position of an obstacle in the second lane of Way $Y_2$ | 1 | AHS car on the way $Y_2$ | 0.1 s |
| | Position of an obstacle in the third lane of Way $Y_2$ | 1 | AHS car on the way $Y_2$ | 0.1 s |
| Road line form (Note 1) | Position at which a slope of the way $Y_1$ changes | 3 | AHS car on the way $Y_1$ | 0.1 s |
| | Average slope between two positions where a slope changes | 4 | AHS car on the way $Y_1$ | 0.1 s |
| | Position at which a slope of the way $Y_2$ changes | 3 | AHS car on the way $Y_2$ | 0.1 s |
| | Average slope between two positions where a slope changes | 4 | AHS car on the way $Y_2$ | 0.1 s |
| | Position at which curvature radius of the way $Y_1$ changes | 3 | AHS car on the way $Y_1$ | 0.1 s |
| | Curvature radius between positions at which curvature radius changes | 4 | AHS car on the way $Y_1$ | 0.1 s |
| | Position at which curvature radius of the way $Y_2$ changes | 3 | AHS car on the way $Y_2$ | 0.1 s |
| | Curvature radius between positions at which curvature radius changes | 4 | AHS car on the way $Y_2$ | 0.1 s |
| Road surface situation | Road surface situation in a service area | 1 | AHS cars on the way $Y_1$, $Y_2$ | 0.1 s |

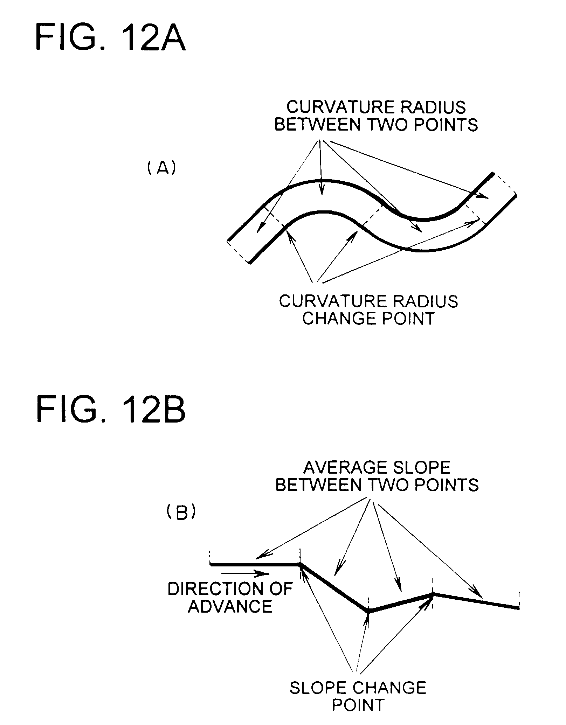

In this Table 2, the "road line form information" is added as a large item for output data. Detail of the "road line form" is shown in Fig. 12 (A) and Fig. 12 (B). Namely the "road line form" data in a service area includes a point (position) where a slope of a road changes, an average slope between two change points and a point (position) where the curvature radius changes, and a curvature radius between two change points, and as the service area as shown in Fig. 11 is actually short in its distance (several hundred meters), so that the curvature and slope change at maximum three points.

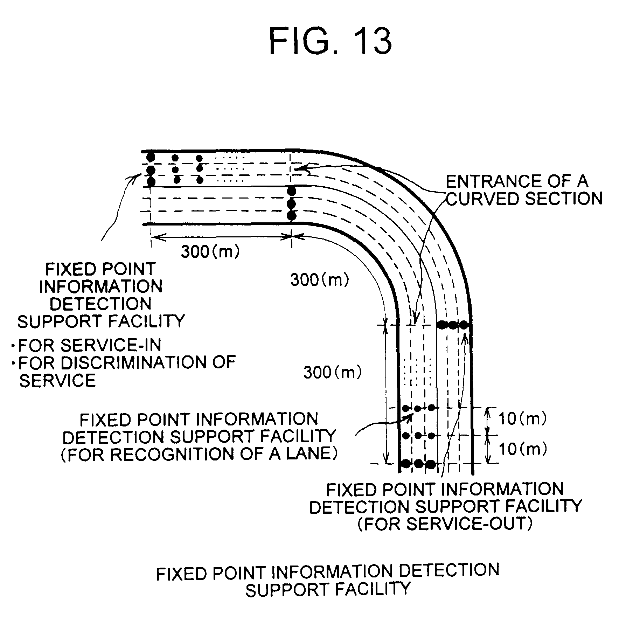

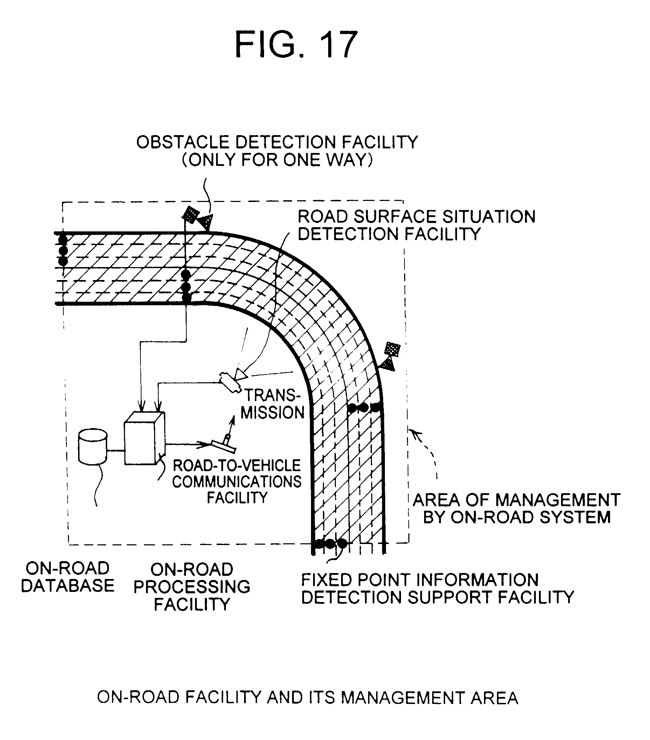

This invention should be applicable to all sections of a road, so that the inventor assumed the case of "curved vehicle-dedicated (single road) without signal" for an example, and examined the requirements for facilities under the conditions of "curved vehicle-dedicated road without any signal". Details of the requirements for the facilities in this case are described below with reference to Fig. 13 to Fig. 16. Fig. 17 is a block diagram showing the on-road processing facility and a management area thereby.

Fig. 13 shows an example of installation of the fixed point information detection support facility. As shown in Fig. 13, when the fixed point information detection support facilities are provided at the interval of 10 m, 60 fix point information detection support facilities are required for one lane (240 pieces in all). Further two fixed point information detection support facilities are required for service in and out for each lane in each service area (12 pieces in all).

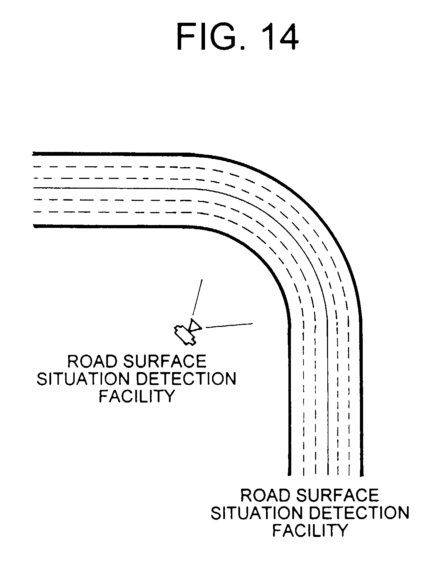

Fig. 14 shows one example of the road surface situation detection facility. Under the conditions of "curved vehicle-dedicated road without any signal", the road surface situation detection facility is provided at a point along a curve of the road not providing a wide field of vision.

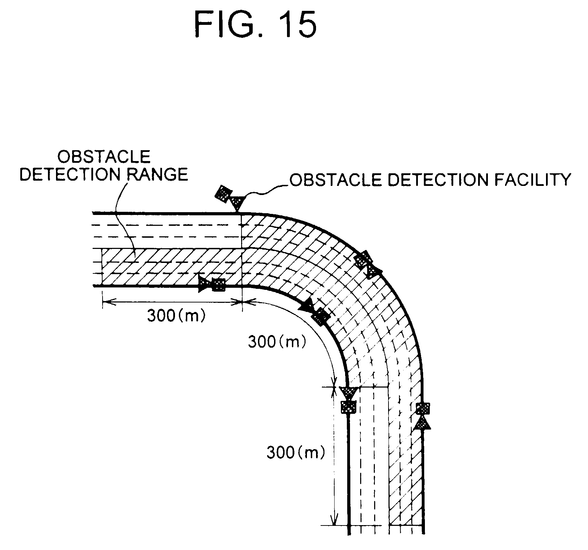

Fig. 15 shows an example of installation of the obstacle detection facilities. In this case, assuming that a "detection range" by one obstacle detection facility is 200 m and detection of obstacles in three lanes are possible, three obstacle detection facilities are required for one way as shown in Fig. 15 (6 units of sensor heads in all for two (up and down) ways).

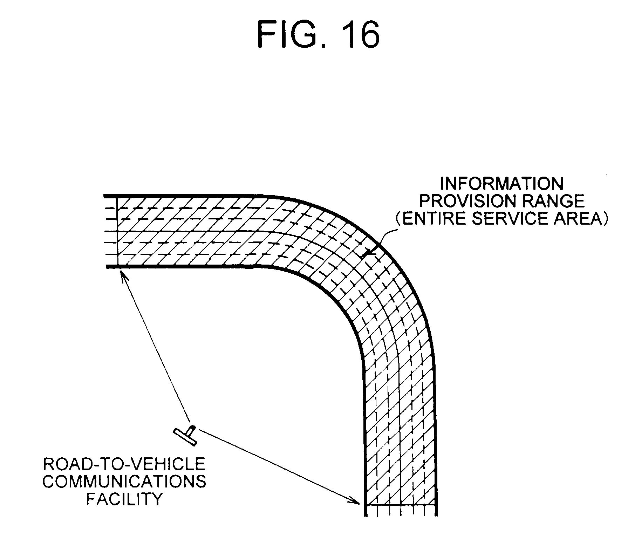

Fig.16 shows an example of installation of the road-to-vehicle communications facility. As shown in Fig. 16, the entire service area is a "communication range" for this road-to-vehicle facility.

Fig. 17 shows an example of the on-road facility as well as of a management range thereby. As shown in Fig. 17, with the on-road processing facility as a base, the road surface situation detection facility, obstacle detection facilities, on-road database, and road-to-vehicle communications facility are installed at respective specified positions, thus information management in a wide area being enabled.

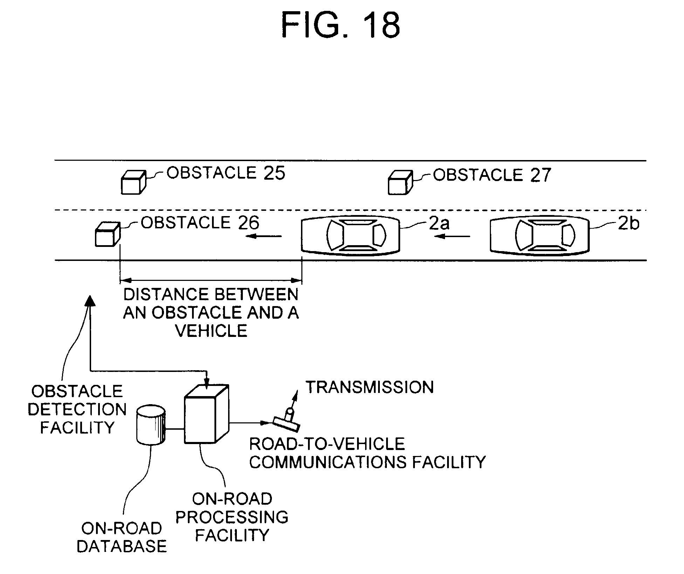

Fig. 18 is an explanatory view for illustrating discrete communications between a road and a vehicle in this invention. It is assumed in the following description that obstacles 25 to 27 are present on two lanes of the road, and two AHS cars 2a, 2b are running on one of the two lanes (in the lower one in Fig. 18) as shown in Fig. 18. Namely in this embodiment, as obstacle information for each of the AHS cars, information concerning the two obstacles 25 and 26 is transmitted to the AHS car 2a, and information on the obstacle 27 which the AHS car 2a has passed by is not transmitted. In contrast, information on the obstacles 26 and 27 is transmitted to the AHS car 2b, and information on the obstacle 25 at a forward position from the obstacle 27 is not transmitted. With this configuration, work load for information processing in each AHS car can be reduced. Further a distance between the AHS car 2a and the obstacle 26 is automatically computed in the on-road facility, and determination on the possibility of collision is accurately made based on the processed data, so that an alarm or instructions for evading the obstacles can properly be issued to each AHS car. For the AHS car 2b, for instance the possibility that the AHS car 2a running ahead of the AHS car 2b reduces the running speed and then stops to evade collision with the obstacle 26 is guessed by the on-road facilities including the on-road processing facility 13, and an alarm or an instruction for evading can properly be delivered to the AHS car 2b, thus enabling the AHS car 2b to evade a rear-end collision with the AHS car 2a. Further, when the AHS car 2a actually reduces the running speed and then stops, more accurate information can be provided by transmitting the information from the AHS car 2a via the on-road facility to the AHS car 2b.

The invention of Claim 1 provides an obstacle collision prevention system comprising an on-road facility in turn comprising an obstacle detection facility for detecting information concerning obstacles on a road, an on-road processing facility for processing information on obstacles detected by said obstacle detection facility using an on-road database with road line form stored therein, a road-to-vehicle communications facility for communicating and delivering the information processed by said on-road processing facility to a road-to-vehicle communications unit on the vehicle, and a plurality of fixed point information detection support facilities provided in a specified service zone; and a vehicle comprising, as on-vehicle devices, a fixed point information detection sensor for recognizing that the vehicle has entered a service zone by detecting the fixed point information detection support facility, a road-to-vehicle communications unit for transacting information with that on the road, an on-vehicle processing unit having a distance computing function for computing while running a distance between the vehicle and an obstacle and a collision determination function for determining the possibility of collision based on the computed distance and issuing an automatic control instruction, a vehicle control unit for reducing a running speed or stopping the vehicle to evade a collision based in the information based from this on-vehicle processing unit, and a vehicle HMI for giving an alarm to a driver of the vehicle, wherein said obstacle collision prevention system detects an obstacle dangerous to the vehicle by integrating information provided from the various types of facilities described above, gives an alarm, when an obstacle is detected, to a driver with the alarm unit, automatically controls for reducing a running speed of or stopping the vehicle, evading a collision, or changing a lane with the vehicle control unit, has the on-road facility discretely communicate with each vehicle running on the road, estimates the possibility of speed reduction or stoppage of a vehicle running ahead based on information concerning any vehicle running ahead or near the vehicle, selectively provides the information to other vehicles via the on-road facilities, and gives controls and instructions for speed reduction or for evading the obstacle from the on-road facilities to the vehicles. Because of the features of the obstacle collision prevention system according to the present invention, there is provided the advantage that necessary and efficient information can accurately be computed and selected at appropriate timing, and controls and instructions for preventing a read-end collision with another vehicle or for evading a collision with an obstacle can accurately be delivered.

The invention of Claim 2 provides the obstacle collision prevention system according to Claim 1 further comprising, as a on-vehicle device, a peripheral situation detection sensor for detecting a peripheral situation around an obstacle on a road, wherein information detected by this peripheral situation detection sensor is integrated with information detected by the obstacle detection facility. Because of the features of the obstacle collision prevention system according to the present invention, there is provided the advantage that necessary and efficient information can be selected and a collision with an obstacle can quickly and accurately be evaded even when an AHS car is running in the "restricted field-of-vision zone" or when a vehicle running ahead suddenly reduces the running speed. Further, as a traffic accident of a running AHS car can be prevented, safety of car drivers can be insured, and the possibility of traffic jam can be reduced.

The invention of Claim 3 provides the obstacle collision prevention system according to Claim 1 or Claim 2 further comprising, as an on-road facility, a road surface situation detection facility for detecting a road surface situation such as humidity, fallen snow on and freezing of a road. Because of the features of the obstacle collision prevention system according to the present invention, there is provided the advantage that an alarm can be issued to a driver and information for proper timing for braking to stop the vehicle can accurately be obtained by automatically delivering the information on detected road surface situation and computing a distance required for stopping the vehicle.

**Claims**

1. An obstacle collision prevention system comprising an on-road facility in turn comprising an obstacle detection facility for detecting information concerning obstacles on a road, an on-road processing facility for processing information on obstacles detected by said obstacle detection facility using an on-road database with road line form stored therein, a road-to-vehicle communications facility for communicating and delivering the information processed by said on-road processing facility to a road-to-vehicle communications unit on the vehicle, and a plurality of fixed point information detection support facilities provided in a specified service zone; and a vehicle comprising, as on-vehicle devices, a fixed point information detection sensor for recognizing that the vehicle has entered a service zone by detecting the fixed point information detection support facility, a road-to-vehicle communications unit for transacting information with that on the road, an on-vehicle processing unit having a distance computing function for computing while running a distance between the vehicle and an obstacle and a collision determination function for determining the possibility of collision based on the computed distance and issuing an automatic control instruction, a vehicle control unit for reducing a running speed or stopping the vehicle to evade a collision based in the information based from this on-vehicle processing unit, and a vehicle HMI for giving an alarm to a driver of the vehicle, wherein said obstacle collision prevention system detects an obstacle dangerous to the vehicle by integrating information provided from the various types of facilities described above, gives an alarm, when an obstacle is detected, to a driver with the alarm unit, automatically controls for reducing a running speed of or stopping the vehicle, evading a collision, or changing a lane with the vehicle control unit, has the on-road facility discretely communicate with each vehicle running on the road, estimates the possibility of speed reduction or stoppage of a vehicle running ahead based on information concerning any vehicle running ahead or near the vehicle, selectively provides the information to other vehicles via the on-road facilities, and give controls and instructions for speed reduction or for evading the obstacle from the on-road facilities to the vehicles.

2. The obstacle collision prevention system according to Claim 1 further comprising, as an on-vehicle device, a peripheral situation detection sensor for detecting obstacles near the vehicle, wherein information detected by this peripheral situation detection sensor is integrated with information detected by the obstacle detection facility.

3. The obstacle collision prevention system according to Claim 1 or Claim 2 further comprising, as an on-road facility, a road surface situation detection facility for detecting a road surface situation such as humidity, fallen snow on and freezing of a road, wherein the road surface information is delivered by the road-to-vehicle communications facility to the vehicle, and assuming that a distance required for speed reduction computed by an on-vehicle processing unit is $L_1$, a speed reduction degree of the vehicle is a, an idle running time of the vehicle is $t_0$, a rising time is $t_1$, and a running speed of the vehicle is V, the speed reduction degree a is estimated from information concerning a road surface situation.

# FIG. 1

ON-ROAD SENSORS AND OTHERS

ON-ROAD FACILITIES

VEHICLE

| ROAD SURFACE |
| OBSTACLE |

FIXED POINT INFORMATION DETECTION SUPPORT FACILITY — 12

11 — ROAD SURFACE SITUATION DETECTION FACILITY

OBSTACLE DETECTION FACILITY — 10

ROAD SURFACE INFORMATION

OBSTACLE INFORMATION

13

ON-ROAD PROCESSING FACILITY

RUNNING SUPPORT INFORMATION PRODUCTION FACILITY

ON-ROAD DATABASE· ROAD LINE FORM INFORMATION — 14

·SERVICE -IN
·SERVICE-OUT
·DISCRIMINATION OF SERVICE
·ROAD LINE INFORMATION

OBSTACLE INFORMATION
ROAD SURFACE INFORMATION
ROAD LINE FORM INFORMATION

ROAD-TO-VEHICLE COMMUNICATION FACILITY

15

POSITION OF THE AHS CAR STATE INFORMATION

OBSTACLE INFORMATION
ROAD SURFACE INFORMATION
ROAD LINE FORM INFORMATION

2

1a

AHS CAR

FIXED POINT INFORMATION DETECTION SENSOR — 17

VEHICLE POSITION DETECTION SENSOR — 4

ROAD-TO-VEHICLE COMMUNICATIONS UNIT — 9

PERIPHERAL SITUATION DETECTION SENSOR — 3

VEHICLE STATE DETECTION SENSOR

5

6 — ON-ROAD PROCESSING UNIT → VEHICLE CONTROL UNIT

7

8 — VEHICLE HMI

EP 1 096 460 A2

# FIG. 2

FIG. 2

ALARM STARTING POINT

INFORMATION PROVISION STARTING POINT

SPEED REDUCTION STARTING POINT

SERVICE AREA

FIXED POINT INFORMATION DETECTION SUPPORT FACILITY (FOR RECOGNIZING A CAR)

AHS CAR

CENTRAL LINE

FIXED POINT INFORMATION DETECTION SUPPORT FACILITY 12a (FOR SERVICE-IN)

OBSTACLE DETECTION FACILITY

OBSTACLE (VEHICLE AT A STOP)

OBSTACLE INFORMATION ROAD SURFACE SITUATION ROAD LINE FORM

ROAD-TO-VEHICLE COMMUNICATIONS FACILITY

ON-LOAD PROCESSING FACILITY

FIXED POINT INFORMATION DETECTION SUPPORT FACILITY 12b (FOR SERVICE-OUT)

$P_1$  12  $P_2$  $P_3$  $P_4$  $P_5$  12

# FIG. 3

FIXED POINT INFORMATION DETECTION SUPPORT FACILITY (FOR RECOGNIZING A LANE)

OBSTACLE (CARS STOPPING OR SLOWING DOWN)

SERVICE AREA

ROAD ◄──► VEHICLE

AN AHS CAR HAS ENTERED A SERVICE AREA

FIXED POINT INFORMATION DETECTION SUPPORT FACILITY (FOR SERVICE-IN)

S1
AVAILABILITY OF THE OBSTACLE COLLISION PREVENTION SYSTEM RECOGNIZED

$P_1$

FIXED POINT INFORMATION DETECTION SUPPORT FACILITY (FOR SERVICE-IN)

S2
POSITION OF THE AHS CAR RECOGNIZED WITH THE FIXED POINT INFORMATION DETECTION SUPPORT FACILITY

$P_5$

DISTANCE FROM A BASE FOR THE AHS CAR

S3
DISTANCE FROM A BASE FOR THE AHS CAR CYCLICALLY COMPUTED

FIXED POINT INFORMATION DETECTION SUPPORT FACILITY (FOR RECOGNIZING A LANE)

S4
LANE FOR THE AHS CAR RECOGNIZED WITH THE FIXED POINT INFORMATION DETECTION SUPPORT FACILITY

$P_1$

$P_5$

LANE FOR THE AHS CAR RECOGNIZED

INFORMATION FROM THE ROAD (OBSTACLE INFORMATION) (ROAD SURFACE SITUATION) (ROAD LINE FORM)

S5
OBSTACLE INFORMATION (INCLUDING A LANE, A POSITION IN THE LANE, A DISTANCE FROM THE BASE), ROAD SURFACE INFORMATION, AND ROAD LINE FORM INFORMATION ACQUIRED FROM THE ON-ROAD FACILITES

DISTANCE BETWEEN THE AHS CAR AND THE OBSTACLE

PROVISION OF INFORMATION ($P_2$)

S6
OBSTACLE INFORMATION SUPPILED TO A DRIVER

$P_5$

DISTANCE FROM A BASE FOR THE AHS CAR

S7
DISTANCE BETWEEN THE AHS CAR AND THE OBSTACLE COMPUTED AND THE POSSIBILITY OF A COLLISION WITH THE OBSTACLE DETERMINED

ALARM ($P_3$)

S8
ALARM (SUCH AS A BUZZER) GIVEN TO THE DRIVER WHEN THERE IS THE POSIBILITY OF A COLLISION WITH THE OBSTACLE

$P_5$

①

# FIG. 4

ROAD ◄──── ──── ► AHS CAR

① 

**S9**

WHEN IT IS DETERMINED THAT THE DRIVER'S OPERATION FOR EVADING THE OBSTACLE IS NOT APPROPRIATE, CONTROL IS PROVIDED FOR REDUCING A RUNNING SPEED OF AND STOPPING THE AHS CAR

SPEED REDUCTION STARTED (P4)

**S10**

WHEN THE AHS CAR IS STOPPED, THE FUNCTION FOR SPEED REDUCTION AND STOPPAGE TERMINATED

AHS CAR STOPPED JUST IN FRONT OF THE OBSTACLE

FIEXED POINT INFORMATION DETECTION SUPPORT FACILITY (FOR SERVICE-OUT)

**S11**

WHEN THE AHS CAR GOES OUT OF THE SERVICE AREA, THE SERVICE IS TERMINATED

FIXED POINT INFORMATION DETECTION SUPPORT FACILITY (FOR SERVICE-CUT)

# FIG. 5

VELOCITY OF THE AHS CAR

B : SPEED REDUCTION CURVE BY BRAKING
BY A DRIVER OR BY THE VEHICLE CONTROL UNIT

120 (km/h)　　　　ALARM

A : SPEED
REDUCTION
CURVE BY
DRIVER'S
OPERATION

POSITION

CURRENT POSITION

$L_A$

$P_A$

STOP POSITION
(IN FRONT OF AN OBSTACLE)

EXPLANATORY VIEW FOR ILLUSTRATING
A METHOD OF DETERMINING THE POSSIBILITY
OF A COLLISION WITH AN OBSTACLE

# FIG. 6

ROAD SURFACE
SITUATION
INFORMATION
INPUT CYCLE : 60s

60 (s)

TIME

OBSTACLE
INFORMATION
INPUT CYCLE : 0.1s

0.1 (s)

TIME

ON-ROAD
PROCESSING
FACILITY
PROCESSING
CYCLE : 0.1s

0.1 (s)

A | B | C        A | (B) | C        A | B | C        TIME

A : PROCESSING OF OBSTACLE INFORMATION
B : PROCESSING OF ROAD SURFACE SITUATION
(B) : ROAD SURFACE SITUATION INFORMATION
     NOT UPDATED
C : DATA OUTPUT  PROCESSING

ROAD-TO-VEHICLE
COMMUNICATIONS
FACILITY
PROCESSING
CYCLE : 0.1s

0.1 (s)

COMMUNICATIONS
PROCESSING

COMMUNICATIONS
PROCESSING

TIME

COMMUNICATIONS
PROCESSING

AHS CAR        AHS CAR        AHS CAR

TIME CHART FOR THE ON-ROAD PROCESSING FACILITY

EP 1 096 460 A2

# FIG. 7

OBSTACLE
(STOPPED VEHICLE)

SERVICE AREA

RESTRICTED FIELD-
OF-VISION ZONE
(DEPENDENT ON A
ROAD FORM)

FIXED POINT
INFORMATION
DETECTION
SUPPORT FACILITY

$L_0$    $L_1+L_2$    $P_1$

$L_3$

$P_5$

# FIG. 8

INDICATING THAT INFORMATION IS TRANSMITTED ONCE FOR EVERY 0.1s FROM THE ON-ROAD FACILITY

DELIVERY OF INFORMATION FROM A ROAD TO VEHICLE

0.1s

---------- TIME

DRIVER OF THE AHS CAR

RECOGNITION/DETERMINATION (2.65s IN ALL)

TIME

OPERATIONS OF THE AHS CAR

PROVISION OF INFORMATION

TIME REQUIRED FOR RISING-UP OF THE BRAKE (0.5s)

TIME REQUIRED FOR THE PROCESSING BY THE FIXED POINT INFORMATION DETECTION SUPPORT FACILITY. ALSO OBSTACLE INFORMATION IS ACQUIRED. (0.1s)

TIME REQUIRED FOR THE PROCESSING BY THE ON-VEHICLE PROCESSING FACILITY (HERE PROCESSING PROVISION OF INFORMATION) (0.1s)

RATE OF SPEED REDUCTION BY THE DRIVER AFTER PROVISION OF INFORMATION 3.0 $(m/s^2)$

STOPPAGE

RUNNING SPEED OF THE AHS CAR

TIME

THE AHS CAR PASSED BY THE FIXED POINT INFORMATION DETECTION SUPPORT FACILITY (PASSED POINT $P_1$)

TIME REQUIRED FOR THE PROCESSING IN THE CAR $t_2=0.2s$

DISTANCE OF IDLING RUN AFTER RECOGNITION AND DETERMINATION $t_0=2.65s$

$t_1=0.5s$

CORRESPONDENCE TO THE DISTANCE

DISTANCE REQUIRED FOR COMPUTING A POSITION OF THE FIXED POINT INFORMATION DETECTION SUPPORT FACILITY

$L_2$

$L_1$

$L_0$

TIME CHART CENTERING ON THE AHS CAR

# FIG. 9

START | ONCE FOR EVERY 60 SECONDS

INFORMATION ON ROAD SURFACE SITUATION AND TIME STORED

ON-ROAD DATABASE

STORED DATA

END

# FIG. 10

START | START UPON INPUT OF OBSTACLE INFORMATION (ONCE FOR EVERY 0.1s)

SELECTION OF A ROAD

OUTPUT DATA PREPARATION PROCESSING
· POSITION OF AN OBSTACLE
· ROAD SURFACE SITUATION
· ROAD LINE FORM INFORMATION

ON-ROAD DATABASE

STORED DATA

OUTPUT DATA

AHS CAR

OBSTACLES ON ALL ROADS PROCESSED?

N

Y

END

# FIG. 11

STRAIGHT SECTION 300 (m)

CENTRAL LINE

CURVED SECTION 400R

WAY Y₁  WAY Y₂

STRAIGHT SECTION 300 (m)

OBJECT SECTION FOR THE OBSTACLE COLLISION PREVENTION SYSTEM (ONE EXAMPLE)

# FIG. 12A

(A)

CURVATURE RADIUS
BETWEEN TWO POINTS

CURVATURE RADIUS
CHANGE POINT

# FIG. 12B

(B)

AVERAGE SLOPE
BETWEEN TWO POINTS

DIRECTION OF
ADVANCE

SLOPE CHANGE
POINT

# FIG. 13

ENTRANCE OF A CURVED SECTION

300(m)

FIXED POINT
INFORMATION
DETECTION
SUPPORT FACILITY

·FOR SERVICE-IN
·FOR DISCRIMINATION OF
  SERVICE

300(m)

FIXED POINT INFORMATION
DETECTION SUPPORT FACILITY
(FOR RECOGNITION OF A LANE)

300(m)

10(m)

10(m)

FIXED POINT INFORMATION
DETECTION SUPPORT FACILITY
(FOR SERVICE-OUT)

FIXED POINT INFORMATION DETECTION
SUPPORT FACILITY

# FIG. 14

ROAD SURFACE
SITUATION DETECTION
FACILITY

ROAD SURFACE
SITUATION DETECTION
FACILITY

# FIG. 15

OBSTACLE
DETECTION RANGE

OBSTACLE DETECTION FACILITY

300(m)

300(m)

300(m)

# FIG. 16

INFORMATION
PROVISION RANGE
(ENTIRE SERVICE AREA)

ROAD-TO-VEHICLE
COMMUNICATIONS
FACILITY

# FIG. 17

OBSTACLE DETECTION FACILITY
(ONLY FOR ONE WAY)

ROAD SURFACE SITUATION
DETECTION FACILITY

TRANS-
MISSION

ROAD-TO-VEHICLE
COMMUNICATIONS
FACILITY

AREA OF MANAGEMENT
BY ON-ROAD SYSTEM

ON-ROAD
DATABASE

ON-ROAD
PROCESSING
FACILITY

FIXED POINT INFORMATION
DETECTION SUPPORT FACILITY

ON-ROAD FACILITY AND ITS MANAGEMENT AREA

# FIG. 18

OBSTACLE 25

OBSTACLE 27

OBSTACLE 26

2a

2b

DISTANCE BETWEEN AN OBSTACLE AND A VEHICLE

OBSTACLE DETECTION FACILITY

TRANSMISSION

ROAD-TO-VEHICLE COMMUNICATIONS FACILITY

ON-ROAD PROCESSING FACILITY

ON-ROAD DATABASE

# FIG. 19

OBSTACLE

ON-ROAD
VEHICLE

VEHICLE

2

1

AHS CAR

4

VEHICLE
POSITION
DETECTION
SENSOR

3

PERIPHERAL
SITUATION
DETECTION
SENSOR

5

VEHICLE
STATE
DETECTION
SENSOR

6 ON-VEHICLE
PROCESSING
UNIT

7 VEHICLE
CONTROL UNIT

8 VEHICLE
HMI

# FIG. 20

OBSTACLE
(A CAR STOPPED)

OBSTACLE DETECTION
IMPOSSIBLE

AHS CAR